# FASCICULE DE BREVET EUROPEEN

(11) **EP 3 245 259 B1**
(45) Date de publication et mention de la délivrance du brevet: **10.06.2020**
(21) Numéro de dépôt: 16700825.9
(22) Date de dépôt: 15.01.2016
(51) Int. Cl.: G04B 19/32, C09C 1/36, C09C 1/40, C09C 3/06, A44C 27/00, C09K 11/02

(54) **PROCÉDÉ DE FABRICATION D'UN MATÉRIAU COMPOSITE CÉRAMIQUE**
VERFAHREN ZUR HERSTELLUNG EINES KERAMISCHES VERBUNDMATERIAL
METHOD TO OBTAIN A CERAMIC COMPOSITE MATERIAL

(30) Priorité: 15.01.2015 EP 15151334
(43) Date de publication de la demande: 22.11.2017
(73) Titulaire: Hublot S.A., Genève, 1204 Genève (CH)
(72) Inventeur: BUTTET, Mathias, 1125 Monnaz (CH)
(74) Mandataire: Plasseraud IP
(86) Numéro de dépôt international: PCT/EP2016/050842
(87) Numéro de publication internationale: WO 2016/113422

(56) Documents cités:
- US-A- 3 294 699
- US-A- 4 344 987
- US-A- 5 607 621
- US-A- 6 051 045
- US-B1- 7 526 928
- LLUSAR M ET AL: "Colour analysis of some cobalt-based blue pigments", JOURNAL OF THE EUROPEAN CERAMIC SOCIETY, ELSEVIER SCIENCE PUBLISHERS, BARKING, ESSEX, GB, vol. 21, no. 8, 1 août 2001 (2001-08-01), pages 1121-1130, XP027368820, ISSN: 0955-2219 [extrait le 2001-08-01]
- QUENARD O ET AL: "Synthesis, microstructure and oxidation of Co-MgAl2O4 and Ni-MgAl2O4 nanocomposite powders", NANOSTRUCTURED MATERIALS, ELSEVIER, NEW YORK, NY, US, vol. 7, no. 5, 1 janvier 1996 (1996-01-01) , pages 497-507, XP004008189, ISSN: 0965-9773, DOI: 10.1016/0965-9773(96)00026-8
- SABERI A ET AL: "A novel approach to synthesis of nanosize MgAl2O4 spinel powder through sol-gel citrate technique and subsequent heat treatment", CERAMICS INTERNATIONAL, ELSEVIER, AMSTERDAM, NL, vol. 35, no. 3, 1 avril 2009 (2009-04-01), pages 933-937, XP025915278, ISSN: 0272-8842, DOI: 10.1016/J.CERAMINT.2008.03.011 [extrait le 2008-07-02]

## Description

### DOMAINE DE L'INVENTION

La présente invention concerne les matériaux composites comprenant des céramiques, notamment à base d'oxydes métalliques ou de métalloïdes, leurs procédés de fabrication et leurs utilisations.

### ARRIERE-PLAN DE L'INVENTION

Les céramiques de couleur produites industriellement sont en général des oxydes d'aluminium (alumine) ou des oxydes de zirconium chargés et mélangés à un pigment. Un pigment est une substance colorante insoluble dans le milieu qu'elle colore. En particulier, les pigments sont utilisés pour colorer un matériau dans la masse.

Dans certains cas, les oxydes peuvent également être colorés directement par la création de défauts, tels que des atomes différents, dans la structure cristalline.

La production de composants en céramique colorée est maîtrisée pour certaines couleurs telles que le noir, le blanc, le bleu et le vert, mais pas pour toutes les couleurs.

Par exemple, malgré tous les efforts fournis, il n'a encore jamais été possible de produire de la céramique de couleur rouge vif. Il existe uniquement des déclinaisons de céramique rouge/orange ou rouge/brun.

En effet, le procédé de fabrication des céramiques colorées consiste à mélanger la céramique en poudre avec un pigment minéral puis à injecter l'ensemble dans des moules pour obtenir ce que l'on appelle un « corps vert » lié par un polymère. Ce corps vert est ensuite délianté, par exemple par chauffage à 600°C, le liant polymère étant alors sublimé. Le corps vert est finalement fritté à une température proche de la température de fusion de la céramique, provoquant ainsi sa densification et l'obtention d'une pièce solide.

Le taux de pigment utilisé varie en fonction de la couleur souhaitée, mais en général quelques pourcents volumiques, typiquement de l'ordre de 3% à 5%, sont suffisants pour colorer la céramique. En effet, pendant la phase de frittage, le pigment va en général diffuser dans la céramique qui est blanche et qui va ainsi prendre la couleur du pigment.

Cependant, lorsque le pigment ne diffuse pas dans la céramique, celle-ci apparaît blanche, ce qui diminue la puissance du pigment ajouté. Les couleurs ainsi obtenues sont en général pales et sans grand intérêt esthétique.

En particulier, il n'existe pas de pigment de couleur rouge qui puisse maintenir sa couleur après l'étape de frittage. Les couleurs obtenues tirent plutôt sur l'orange, le bordeaux, voire le brun.

La présente invention a notamment pour but de proposer de nouveaux matériaux composites permettant d'élargir significativement la gamme de couleurs possibles dans la production de céramiques colorées.

La présente invention a également pour but de de proposer un nouveau matériau composite comprenant un pigment luminescent.

Le document LLUSAR M ET AL, "Colour analysis of some cobalt-based blue pigments", JOURNAL OF THE EUROPEAN CERAMIC SOCIETY, ELSEVIER SCIENCE PUBLISHERS, BARKING, ESSEX, GB, vol. 21, no. 8, 1, août 2001, indique que l'efficacité de coloration dans différents émaux céramiques du pigment bleu olivine classique (Co₂SiO₄) a été comparée à celle obtenue avec une willemite dopée au cobalt (Co_{0.05}Zn_{1.95}SiO₄, et avec uns spinelle Co-Al dopée au magnésium (Mg_{0.2}Co_{0.8}Al₂O₄). Les pigments cuits et les échantillons émaillés ont été caractérisés par spectroscopie XRD, UV-VIS-NIR, mesures de couleur CIEL*a*b*, et par SEM/EDX. Les pigments Co-olivine et Co-willemite se sont dissous à un degré plus élevé dans les glasures fondues que la spinelle Co-Al. La couleur bleue plus foncée de la Co-olivine est principalement due aux ions Co²⁺ incorporés dans la matrice vitreuse. La composition de Co-willemite (qui ne contenait que 1,3 % en poids de Co) a développé la teinte de couleur la plus bleue de tous les pigments dans les émaux à double et simple cuisson, tandis que la spinelle Co-Al dopée au magnésium s'est révélée le pigment bleu le plus approprié dans la coloration en masse du grès cérame à cuisson rapide.

### OBJETS DE L'INVENTION

A cet effet, l'invention concerne un procédé pour fabriquer un produit d'horlogerie ou de joaillerie comprenant un matériau composite combinant:
- une matrice à base d'oxyde métallique ou de métalloïde, ladite matrice étant adaptée pour laisser passer la lumière (après frittage) et présentant des températures de densification qui dépendent de la pression à laquelle est soumise ladite matrice,
- un pigment minéral dispersé dans la matrice, présentant une certaine température de détérioration au-delà de laquelle ledit pigment minéral est détérioré,
la matrice ayant des températures de densification supérieures à la température de détérioration du pigment minéral dans au moins une plage de pression inférieure à 80 MPa, notamment à pression atmosphérique,
le procédé comportant les étapes suivantes :
a) mélange du pigment minéral sous forme de poudre avec la matrice sous forme de poudre ; et
b) frittage dudit mélange de poudres sous une pression supérieure ou égale à 80 MPa suffisante pour que la température de densification de la matrice sous ladite pression soit inférieure à la température de détérioration du pigment minéral, le frittage étant réalisé à une température supérieure ou égale à la température de densification de la matrice et inférieure à la température de détérioration du pigment minéral.

Dans des modes de réalisation préférés du procédé selon l'invention, on peut avantageusement avoir recours en outre à l'une et/ou à l'autre des dispositions suivantes :
- le pigment minéral présente un diamètre moyen compris entre 0,2 µm et 10 µm ;
- la température de densification de la matrice sous ladite pression appliquée lors du frittage, est inférieure à 1300°C ;
- la température de frittage (température appliquée lors du frittage) est inférieure à 1300 °C, voire inférieure ou égale à 1200 °C ;
- le pigment minéral représente une fraction volumique comprise entre 2% et 50% dudit matériau composite ;
- la matrice céramique est à base de spinelle d'aluminate de magnésium MgAl₂O₄ ;
- la matrice céramique est à base de zircone stabilisée à l'yttrium ;
- la pression appliquée lors du frittage est au moins égale à 200 MPa ;
- le pigment minéral est à base d'aluminate de strontium dopé à l'europium ;
- la pression appliquée lors du frittage est au moins égale à 600 MPa ;
- ledit produit est un cadran horloger.

### BREVE DESCRIPTION DES DESSINS

L'invention sera mieux comprise à la lecture de la description qui va suivre de plusieurs de ses modes de réalisation, donnés uniquement à titre d'exemples non limitatifs en se référant aux dessins joints, sur lesquels :
- la Figure 1 est une illustration schématique d'un exemple de procédé de fabrication d'un matériau composite selon un mode de réalisation de l'invention ; et
- la Figure 2 est une coupe cristallographique montrant un matériau composite selon un mode de réalisation de l'invention.

### DESCRIPTION PLUS DETAILLEE

Comme expliqué ci-dessus, l'invention concerne un matériau composite destiné à être utilisé notamment en horlogerie ou joaillerie, ledit matériau combinant :
- un pigment minéral ; et
- une matrice à base d'oxyde métallique ou de métalloïde, la matrice étant adaptée pour laisser passer la lumière et présentant une température de densification, une sous pression adaptée, inférieure à une température de détérioration du pigment minéral.

Le pigment minéral peut représenter une fraction volumique comprise entre 2% et 50% du matériau composite.

Le pigment minéral est choisi en fonction de la couleur souhaitée pour le matériau composite.

De préférence, le noyau du pigment minéral est adapté pour laisser passer la lumière, c'est-à-dire qu'il est transparent ou translucide.

Ainsi, si une particule se trouve à la surface du matériau composite et qu'elle est polie, la couleur du revêtement reste visible à travers le noyau.

Par exemple, le noyau du pigment minéral peut être fabriqué à partir d'un matériau choisi parmi :
- le mica, par exemple la muscovite ou la biotite ;
- l'alumine Al₂O₃ ;
- la zircone ZrO₂ ;
- le dioxyde de titane TiO₂.

Le pigment minéral peut être une source luminescente (phosphorescente ou/et fluorescente) qui comporte des aluminates de terres rares, comme par exemple l'aluminate de strontium dopé par de l'europium. C'est le cas de la gamme de produits connue sous le nom commercial Super-LumiNova® et qui existe sous différentes teintes et couleurs. Les silicates de terres rares ou un mélange d'aluminates et de silicates de terres rares peuvent également être des sources luminescentes.

Il existe également d'autres références, telles quel le « LumiBrite » développé par la société Seiko ou des sources moins intéressantes comme les sources radio luminescentes ou auto luminescentes qui contiennent des éléments radioactifs et dont l'utilisation est strictement restreinte. On parle ici de tritium, radium ou prométhium.

Certains gaz peuvent également présenter une capacité luminescente, dans ces cas ils sont confinés dans des capsules en verre.

Des exemples de pigments luminescents sont donnés dans les documents suivants : US 3 294 699 A, US 2 544 236 A, US 5 607 621 A, WO 02/083814 A1 et US 2 544 236 A.

Le pigment minéral peut présenter un diamètre moyen compris entre 0,2 µm et 10 µm.

Avantageusement, la température de détérioration du pigment minéral est supérieure à 1300°C. Cette température correspond à la température de décomposition du pigment minéral qui entraîne un changement de couleur de celui-ci, ou autrement dit à la température à laquelle la couleur du pigment minéral est altérée.

La matrice est choisie de telle sorte que sa température de densification, sous une pression suffisante, soit inférieure à la température de détérioration du pigment minéral, donc avantageusement inférieure à 1300°C.

Les pigments luminescents ne résistent pas en général à des températures supérieures à 800°C dans une atmosphère inerte. Dans ce cas, il sera nécessaire d'augmenter la pression de densification de la matrice afin qu'elle puisse être densifiée à 800°C tout en restant transparente.

La matrice est adaptée pour laisser passer la lumière, c'est-à-dire qu'elle est transparente ou translucide. Pour cela, la matrice est par exemple préparée suivant des procédés connus pour les céramiques transparentes. Cette adaptation réside alors en particulier dans le choix de l'oxyde et dans les conditions de mise en forme, c'est-à-dire la température de densification et la pression.

Comme vu précédemment, la matrice est à base d'oxyde métallique ou d'oxyde de métalloïde.

Le concept de métalloïde se rapporte à un élément chimique qui ne peut être classé ni dans les métaux ni parmi les non-métaux, c'est-à-dire dont les propriétés physiques et chimiques sont intermédiaires entre celles d'un métal et d'un non-métal.

Les métalloïdes sont caractérisés par les propriétés suivantes :
- leurs oxydes sont généralement amphotères (ceux des métaux sont plutôt basiques et ceux des non-métaux plutôt acides) ;
- ils se comportent comme des semi-conducteurs (notamment le bore, le silicium et le germanium).

Les métalloïdes forment donc une bande oblique dans le tableau périodique entre les métaux et les non-métaux :
- Bore ₅B
- Silicium ₁₄Si
- Germanium ₃₂Ge
- Arsenic ₃₃As
- Antimoine ₅₁Sb
- Tellure ₅₂Te
- Astate ₈₅At

En particulier, la matrice peut être une céramique.

Parmi les matrices céramiques utilisables dans le cadre de la présente invention, on peut trouver le spinelle d'aluminate de magnésium (MgAl₂O₄), la zircone ou l'alumine pure.

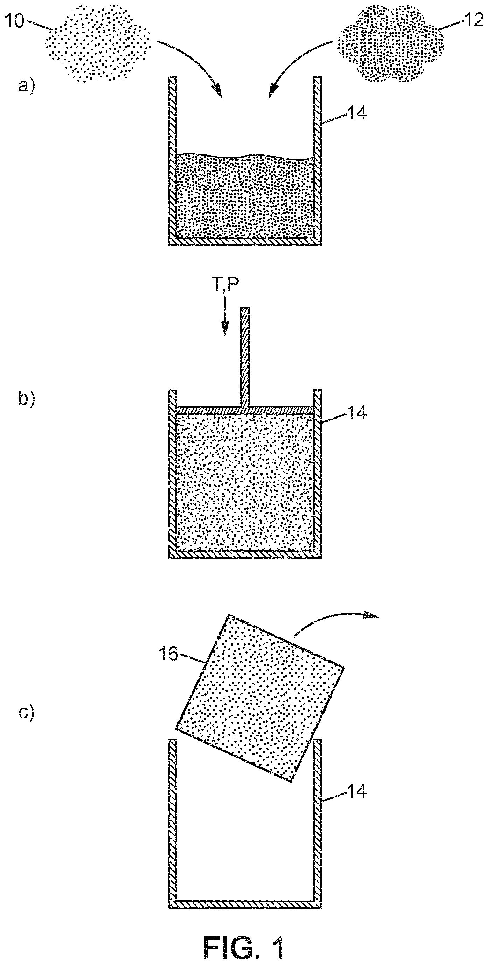

On peut fabriquer un matériau composite selon l'invention notamment par le procédé illustré sur la Figure 1 et comprenant les étapes suivantes :
a) mélange du pigment minéral 10 sous forme de poudre avec la matrice 12 sous forme de poudre dans un moule 14 ;
b) frittage du mélange de poudres sous une pression suffisante pour que la température de densification de la matrice 12 sous cette pression reste inférieure à la température de détérioration du pigment minéral 10, le frittage ayant lieu à une température de frittage inférieure à la température de de détérioration du pigment minéral 10 et au moins égale à la température de densification de la matrice ;
c) retrait du matériau composite 16 du moule 14.

La pression appliquée lors du frittage est généralement supérieure ou égale à 80 MPa, voire supérieure ou égale à 100 MPa et l'invention est spécialement adaptée aux cas où la matrice a des températures de densification supérieures à la température de détérioration du pigment minéral dans au moins une plage de pression inférieure à 80 MPa, voire inférieure à 100 MPa.

Ainsi, sous la pression et la chaleur, le pigment minéral est stable tandis que la matrice enrobe toutes les particules du pigment minéral.

Le frittage peut être réalisé sous pression uniaxiale à l'aide d'une presse SPS (« Spark Plasma Sintering ») dans laquelle la montée en température peut être effectuée en quelques minutes.

Il est également possible de terminer le frittage par frittage sous pression isostatique. Il s'agit dans un premier temps de presser le mélange de poudres pour en former des pastilles ou d'injecter des composants par une technique classique d'injection des céramiques, puis d'effectuer un premier frittage dont l'effet sera de fermer les porosités sans forcément terminer le procédé. Le frittage est alors finalisé dans un four qui peut être pressurisé sous gaz jusqu'à 200 MPa en général.

### Exemple 1 (exemple donné à titre d'information, non couvert par les revendications)

On utilise une poudre de spinelle d'aluminate de magnésium (MgAl₂O₄) ayant une taille de particules de 0,2 µm avec comme impuretés moins de 10 ppm de Fe, Ca, Na, et moins de 20 ppm de Si, par exemple celle produite par la société Baikowski sous la référence S30 CR.

Le dosage de pigment minéral peut varier de 5% à 30% en volume.

Le frittage du spinelle MgAl₂O₄ est généralement opéré à une température supérieure à 1800°C. Selon l'invention, afin de préserver le pigment minéral et conserver son intensité, le frittage est effectué à 1200°C, sous très haute pression, isostatique ou uniaxiale.

La densification du spinelle MgAl₂O₄ est possible dans cette zone de température, à condition que la pression soit supérieure à 80 MPa, voire supérieure à 100 MPa.

De plus, cette zone de température permet d'utiliser une large gamme de pigments sans les détériorer.

On obtient ainsi un matériau composite céramique dense avec une transparence qui permette d'utiliser la coloration du pigment minéral sur une profondeur de quelques dixièmes de millimètres, au lieu d'avoir uniquement l'effet de couleur par les particules de pigment en surface.

En particulier, on mélange 32,76 g de spinelle MgAl₂O₄ (S30 CR de Baikowski) avec 4,6 g de pigment rouge (noyau en TiO₂ avec un revêtement de KAl₂(AlSi₃O₁₀)(OH)₂) pour obtenir un mélange avec 10% de pigment en volume. On remplit un moule en graphite de 30 mm de diamètre avec 4 g du mélange. On fritte le mélange sous pression pendant 5 min dans une presse SPS à 1200°C avec une force de 70 kN correspondant à une pression de 100 MPa. On obtient un disque de céramique dense de couleur rouge vif.

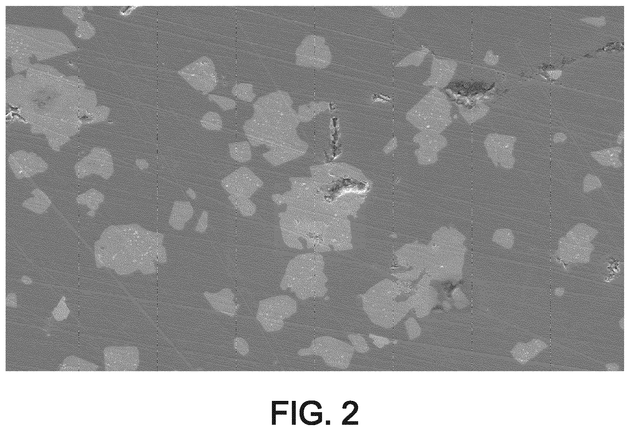

La coupe cristallographique représentée sur la Figure 2 a été réalisée en microscopie électronique à balayage (MEB), agrandissement x 1500, sur un échantillon d'un matériau composite fabriqué selon le procédé de l'exemple 1 poli par des particules de diamant jusqu'à 0,25 µm. Les zones claires correspondent aux particules de pigment.

### Exemple 2 (exemple donné à titre d'information, non couvert par les revendications)

On utilise de la zircone stabilisée à l'yttrium qui, après frittage à 1200°C sous une pression supérieure à 200 MPa, isostatique ou uniaxiale, peut mener à l'obtention d'une zircone transparente ou translucide.

Ainsi, en mélangeant jusqu'à 30% en volume de pigment rouge avec une zircone stabilisée à l'yttrium (ajout d'yttrium à hauteur de 8%), on obtient un effet similaire à celui obtenu avec le verre ou le spinelle MgAl₂O₄, c'est-à-dire une matrice transparente avec des pigments rouge emprisonnés à l'intérieur.

Une des applications envisagées est la fabrication de cadrans en utilisant le pigment phosphorescent. Les cadrans fabriqués avec ce matériau auront une durée et une puissance phosphorescente beaucoup plus importante qu'un cadran sur lequel une peinture phosphorescente serait appliquée. La matrice du matériau étant transparente, l'illumination des pigments se trouvant sur 1 à 2 mm en profondeur est visible, de cette façon une surface significativement plus importante du pigment est visible, contrairement à une couche de peinture qui n'est fonctionnelle que sur quelques micromètres.

Cette dernière application est particulièrement intéressante dans le domaine des montres de sport pour la plongée sous-marine.

## Revendications

1. Procédé pour fabriquer un produit d'horlogerie ou de joaillerie comprenant un matériau composite (16) combinant:
- une matrice (12) à base d'oxyde métallique ou de métalloïde, ladite matrice (12) étant adaptée pour laisser passer la lumière et présentant des températures de densification qui dépendent de la pression à laquelle est soumise ladite matrice,
- un pigment minéral (10) dispersé dans la matrice, présentant une certaine température de détérioration au-delà de laquelle ledit pigment minéral (10) est détérioré, le pigment minéral (10) étant luminescent et comportant des aluminates de terres rares et/ou des silicates de terres rares ;
la matrice ayant des températures de densification supérieures à la température de détérioration du pigment minéral dans au moins une plage de pression inférieure à 80 MPa,
le procédé comportant les étapes suivantes :
a) mélange du pigment minéral (10) sous forme de poudre avec la matrice (12) sous forme de poudre ; et
b) frittage dudit mélange de poudres sous une pression supérieure ou égale à 80 MPa, suffisante pour que la température de densification de la matrice (12) sous ladite pression soit inférieure à la température de détérioration du pigment minéral (10), le frittage étant réalisé à une température supérieure ou égale à la température de densification de la matrice et inférieure à la température de détérioration du pigment minéral.

2. Procédé selon la revendication 1, dans lequel le pigment minéral (10) présente un diamètre moyen compris entre 0,2 µm et 10 µm.

3. Procédé selon l'une quelconque des revendications précédentes, dans lequel la température de densification de la matrice (12) sous ladite pression appliquée lors du frittage, est inférieure à 1300°C.

4. Procédé selon l'une quelconque des revendications précédentes, dans lequel le pigment minéral (10) représente une fraction volumique comprise entre 2% et 50% dudit matériau composite (16).

5. Procédé selon l'une quelconque des revendications précédentes, dans lequel la matrice céramique est à base de spinelle d'aluminate de magnésium MgAl₂O₄.

6. Procédé selon l'une quelconque des revendications 1 à 5, dans lequel la matrice céramique est à base de zircone stabilisée à l'yttrium.

7. Procédé selon la revendication 1, dans lequel le pigment minéral (10) est à base d'aluminate de strontium dopé à l'europium.

8. Procédé selon l'une quelconque des revendications précédentes, dans lequel la pression appliquée lors du frittage est au moins égale à 600 MPa.

9. Procédé selon l'une quelconque des revendications précédentes, dans lequel ledit produit est un cadran horloger.

## Patentansprüche

1. Verfahren zur Herstellung eines Uhrmacherei- oder Juwelierprodukts umfassend ein Verbundmaterial (16), das kombiniert:
- eine Matrix (12) auf der Basis von Metalloxid oder Metalloid, wobei die Matrix (12) dazu eingerichtet ist, das Licht durchzulassen und Verdichtungstemperaturen aufweist, die vom Druck abhängen dem die Matrix ausgesetzt ist,
- ein in der Matrix dispergiertes Mineralpigment (10), das eine bestimmte Verschlechterungstemperatur aufweist, oberhalb derer das Mineralpigment (10) verschlechtert ist, wobei das Mineralpigment (10) lumineszierend ist und Aluminate von seltenen Erden und/oder Silikate von seltenen Erden umfasst;
wobei die Matrix Verdichtungstemperaturen über der Verschlechterungstemperatur des Mineralpigments in mindestens einem Druckbereich von weniger als 80 MPa aufweist, wobei das Verfahren die folgenden Schritte umfasst:
a) Mischen des Mineralpigments (10) in Pulverform mit der Matrix (12) in Pulverform; und
b) Sintern der Pulvermischung unter einem Druck von mehr als oder gleich 80 MPa, der ausreichend ist damit die Verdichtungstemperatur der Matrix (12) unter diesem Druck unterhalb der Verschlechterungstemperatur des Mineralpigments (10) liegt, wobei das Sintern bei einer Temperatur durchgeführt wird, die höher als oder gleich der Verdichtungstemperatur der Matrix und niedriger als die Verschlechterungstemperatur des Mineralpigments ist.

2. Verfahren nach Anspruch 1, bei dem das Mineralpigment (10) einen durchschnittlichen Durchmesser zwischen 0,2 µm und 10 µm aufweist.

3. Verfahren nach einem der vorhergehenden Ansprüche, bei dem die Verdichtungstemperatur der Matrix (12) unter dem während des Sinterns ausgeübten Druck weniger als 1300 ºC beträgt.

4. Verfahren nach einem der vorhergehenden Ansprüche, bei dem das Mineralpigment (10) einen Volumenanteil zwischen 2% und 50% des Verbundmaterials (16) darstellt.

5. Verfahren nach einem der vorhergehenden Ansprüche, bei dem die Keramikmatrix auf Magnesiumaluminat-Spinell MgAl₂O₄ basiert.

6. Verfahren nach einem der Ansprüche 1 bis 5, bei dem die Keramikmatrix auf mit Yttrium stabilisiertem Zirkonoxid basiert.

7. Verfahren nach Anspruch 1, bei dem das Mineralpigment (10) auf mit Europium dotiertem Strontiumaluminat basiert.

8. Verfahren nach einem der vorhergehenden Ansprüche, bei dem der während des Sinterns ausgeübte Druck mindestens gleich 600 MPa ist.

9. Verfahren nach einem der vorhergehenden Ansprüche, bei dem das Produkt ein Uhrziffernblatt ist.

## Claims

1. Method for manufacturing an horology or jewellery product comprising a composite material (16) combining:
- a matrix (12) containing metal oxide or metalloid, said matrix (12) being adapted for letting through light and having densification temperatures that are dependent on the pressure to which said matrix is subjected,
- a mineral pigment (10) dispersed in the matrix, having a certain deterioration temperature beyond which said mineral pigment (10) is deteriorated, the mineral pigment (10) being luminescent and including rare-earth aluminates and/or rare-earth silicates;
the matrix having densification temperatures greater than the deterioration temperature of the mineral pigment in at least a pressure range lower than 80 MPa,
the method including the following steps:
a) mixing the mineral pigment (10) in the form of a powder with the matrix (12) in the form of a powder; and
b) sintering said mixture of powders under a pressure greater than or equal to 80 MPa, sufficient for the densification temperature of the matrix (12) under said pressure to be lower than the deterioration temperature of the mineral pigment (10), the sintering being carried out at a temperature greater than or equal to the densification temperature of the matrix and lower than the deterioration temperature of the mineral pigment.

2. Method according to claim 1, wherein the mineral pigment (10) has an average diameter between 0.2 µm and 10 µm.

3. Method according to any one of the preceding claims, wherein the densification temperature of the matrix (12) under said pressure applied during the sintering is less than 1300°C.

4. Method according to any one of the preceding claims, wherein the mineral pigment (10) represents a volume fraction comprised between 2% and 50% of said composite material (16).

5. Method according to any one of the preceding claims, wherein the ceramic matrix contains MgAl₂O4 magnesium aluminate spinel.

6. Method according to any one of claims 1 to 5, wherein the ceramic matrix contains zirconia stabilised with yttrium.

7. Method according to claim 1, wherein the mineral pigment (10) contains strontium aluminate doped with europium.

8. Method according to any one of the preceding claims, wherein the pressure applied during the sintering is at least equal to 600 MPa.

9. Method according to any one of the preceding claims, wherein said product is an horological dial.
